# EUROPÄISCHE PATENTSCHRIFT

(11) **EP 1 754 908 B1**
(45) Veröffentlichungstag und Bekanntmachung des Hinweises auf die Patenterteilung: **09.02.2011**
(21) Anmeldenummer: 06015729.4
(22) Anmeldetag: 28.07.2006
(51) Int. Cl.: F16F 7/09, D06F 37/20

(54) **Dämpfer**
Damper
Amortisseur

(30) Priorität: 16.08.2005 DE 102005038953
(43) Veröffentlichungstag der Anmeldung: 21.02.2007
(73) Patentinhaber: SUSPA GmbH, 90518 Altdorf (DE)
(72) Erfinder: Peuker, Thomas, 92260 Ammerthal (DE); Pelczer, Andreas, 91717 Wassertrüdingen (DE)
(74) Vertreter: Rau, Albrecht

(56) Entgegenhaltungen:
- EP-A- 0 301 190
- EP-A- 1 455 011
- EP-A- 1 637 640
- DE-A1- 3 216 152

## Beschreibung

Die Erfindung betrifft einen Dämpfer, insbesondere für Waschmaschinen mit Schleudergang.

Derartige Dämpfer werden zur Schwingungsdämpfung in Trommelwaschmaschinen eingesetzt, um einen ruhigen und erschütterungsfreien Lauf der Trommelwaschmaschine zu gewährleisten. Bekannte Dämpfer weisen bei unterschiedlichen Drehzahlen der Waschtrommel ein von der Schwingungsamplitude abhängiges Dämpfungsverhalten auf. Im Bereich kleiner Amplituden ist eine geringe Dämpfungswirkung der Dämpfer wünschenswert, wohingegen bei großen Amplituden eine möglichst hohe Dämpfungswirkung wünschenswert ist. Dieses amplitudenabhängige Dämpfungsverhalten resultiert in einem konstruktiv aufwendigen Aufbau der Dämpfer.

Ein derartiger Dämpfer ist beispielsweise aus der EP 0 301 190 A1 bekannt.

Ein weiterer derartiger Dämpfer ist in der nicht vorveröffentlichten, derselben Anmelderin gehörenden EP 1 637 640 A1 beschrieben, die einen Stand der Technik im Sinne des Artikels 54(3) EPÜ darstellt. Der Erfindung liegt die Aufgabe zugrunde, einen möglichst einfachen Dämpfer mit einem amplitudenabhängigen Dämpfungsverhalten zu schaffen, der robust und geräuscharm ist.

Diese Aufgabe wird durch die Merkmale des Anspruchs 1 gelöst. Der Kern der Erfindung besteht darin, dass zur Dämpfung des Anschlagens des mindestens einen Kolbens an dem mindestens einen Anschlag-Element mindestens ein zwischen dem mindestens einen Kolben und dem mindestens einen Anschlag-Element angeordneter Anschlagpuffer angeordnet ist, wobei der mindestens eine Anschlagpuffer mindestens ein elastisch verbiegbares und einteilig mit dem mindestens einen Kolben oder mit dem mindestens einen Anschlag-Element ausgebildetes Anschlagpuffer-Element aufweist. Bei großen Schwingungsamplituden wird die Bewegung des mindestens einen Kolbens durch Anschlagen an dem mindestens einen Anschlag-Element begrenzt, wobei der mindestens eine Kolben eine Relativbewegung zu dem Gehäuse und/oder dem Stößel ausführt und der mindestens eine Reib-Belag zur Erzeugung einer Dämpfung reibt. Durch den mindestens einen Anschlagpuffer wird das Anschlagen des mindestens einen Kolbens an dem mindestens einen Anschlag-Element gedämpft, so dass der Dämpfer robust und geräuscharm ist. Dadurch, dass das mindestens eine Anschlagpuffer-Element des mindestens einen Anschlagpuffers elastisch verbiegbar und einteilig mit dem mindestens einen Kolben oder mit dem mindestens einen Anschlag-Element ausgebildet ist, ist der Dämpfer einfach aufgebaut und kostengünstig herstellbar. Erfindungsgemäß, ist das mindestens eine Anschlagpuffer-Element 55 aus Kunststoff ausgebildet.

Weitere vorteilhafte Ausgestaltungen der Erfindung ergeben sich aus den Unteransprüchen.

Weitere Merkmale, Einzelheiten und Vorteile der Erfindung sind der nachfolgenden Beschreibung entnehmbar, in der mehrere Ausführungsbeispiele anhand der beigefügten Zeichnung näher erläutert werden. Diese zeigt:
- Fig. 1: eine Trommelwaschmaschine in schematischer Darstellung in Seitenansicht mit einem Dämpfer gemäß einem ersten Ausfüh- rungsbeispiel,
- Fig. 2: die Trommelwaschmaschine gemäß Fig. 1 in Vorderansicht,
- Fig. 3: einen Axialschnitt des Dämpfers gemäß Fig. 1,
- Fig. 4: eine perspektivische Ansicht eines Kolbens des Dämpfers ge- mäß Fig. 1,
- Fig. 5: eine Draufsicht auf den Kolben gemäß Fig. 4,
- Fig. 6: eine perspektivische Ansicht einer Verschluss-Kappe des Dämpfers gemäß Fig. 1,
- Fig. 7: einen Axialschnitt eines Dämpfers gemäß einem zweiten Ausführungsbeispiel,
- Fig. 8: eine perspektivische Ansicht eines Kolbens des Dämpfers gemäß Fig. 7,
- Fig. 9: einen Axialschnitt eines Dämpfers gemäß einem dritten Ausführungsbeispiel, und
- Fig. 10: einen Axialschnitt eines Dämpfers gemäß einem vierten Ausführungsbeispiel.

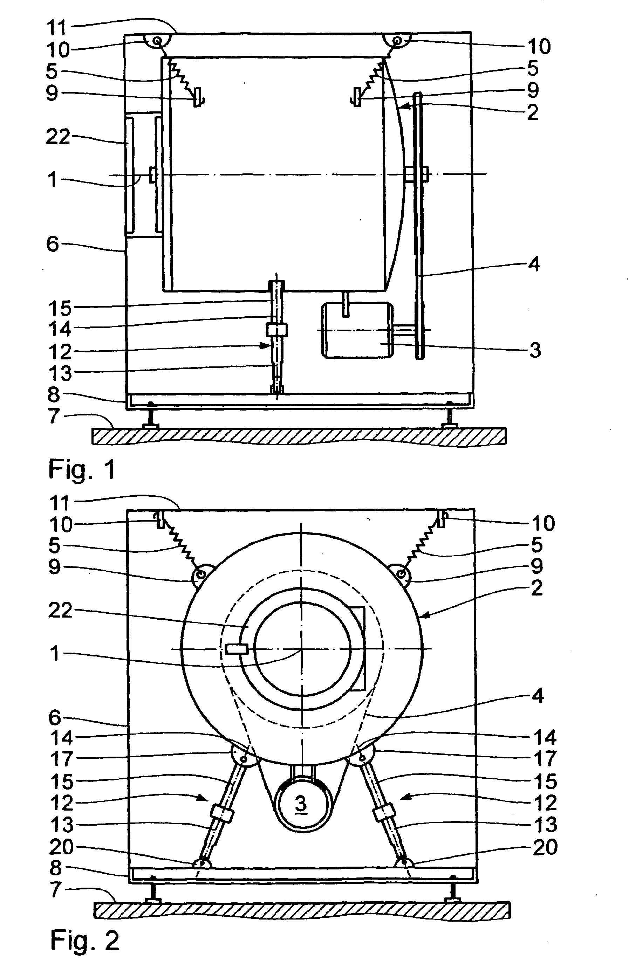

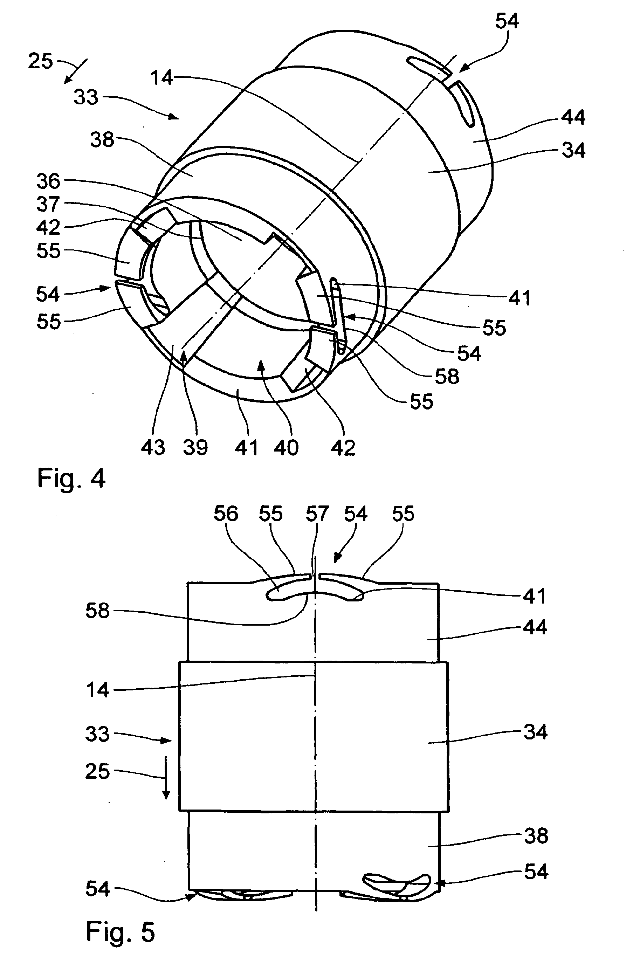

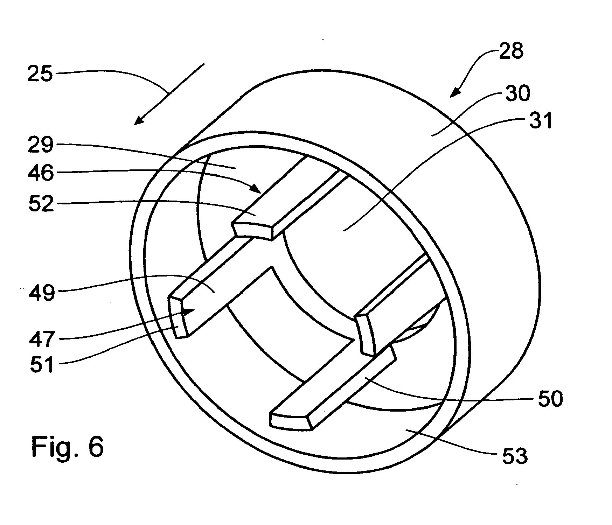

Nachfolgend wird unter Bezugnahme auf die Fig. 1 bis 6 ein erstes Ausführungsbeispiel der Erfindung beschrieben. Eine in den Fig. 1 und 2 dargestellte Trommelwaschmaschine mit waagerechter oder geneigter Trommel-Achse 1 weist ein schwingungsfähiges Wasch-Aggregat 2 mit einem Antriebs-Motor 3 auf, der eine nicht im Einzelnen dargestellte Wasch-Trommel über einen Riemen-Trieb 4 antreibt. Weitere mit dem Wasch-Aggregat 2 verbundene Bestandteile, beispielsweise ein Getriebe, sind der Einfachheit halber nicht dargestellt. Das schwingungsfähige Wasch-Aggregat 2 ist mittels Schrauben-Zugfedern 5 an einem WaschmaschinenGehäuse 6 aufgehängt, das gegenüber einem auf dem Boden 7 stehenden, einen Grundrahmen bildenden Maschinen-Gestell 8 abgestützt und mit diesem verbunden ist. Die Schrauben-Zugfedern 5 sind einerseits an ersten Ösen 9 angebracht, die im oberen Bereich des Wasch-Aggregats 2 angeordnet sind. Andererseits sind sie an zweiten Ösen 10 aufgehängt, die am Waschmaschinen-Gehäuse 6 ausgebildet sind. Das Gehäuse 6 ist mit einer Deckplatte 11 abgedeckt.

An der Unterseite des Wasch-Aggregats 2 sind mittig zwei nachfolgend genauer beschriebene Reibungsdämpfer 12 angebracht, die mit dem Maschinen-Gestell 8 verbunden sind. Jeder Reibungsdämpfer 12 weist ein rohrförmiges Gehäuse 13 mit einer Mittel-Längs-Achse 14 auf, in dem koaxial ein Stößel 15 verschiebbar geführt ist. Der Stößel 15 weist an seinem freien Ende ein erstes Befestigungs-Element 16 auf, mittels dem der Reibungsdämpfer 12 an einem ersten Lager 17 an dem Wasch-Aggregat 2 derart angebracht ist, dass der Reibungsdämpfer 12 um eine zu der Trommel-Achse 1 parallele erste Schwenk-Achse 18 relativ zu dem Wasch-Aggregat 2 schwenkbar ist. An dem freien Ende des Gehäuses 13 ist ein zweites Befestigungs-Element 19 angebracht, mittels dem der Reibungsdämpfer 12 an einem zweiten Lager 20 an dem Maschinen-Gestell 8 derart angebracht ist, dass der Reibungsdämpfer 12 um eine zu der Trommel-Achse 1 parallele zweite Schwenk-Achse 21 relativ zu dem Maschinen-Gestell 8 schwenkbar ist. Die Eingabe und Entnahme von Wäsche erfolgt durch eine an dem Wasch-Aggregat 2 angeordnete Klappe 22.

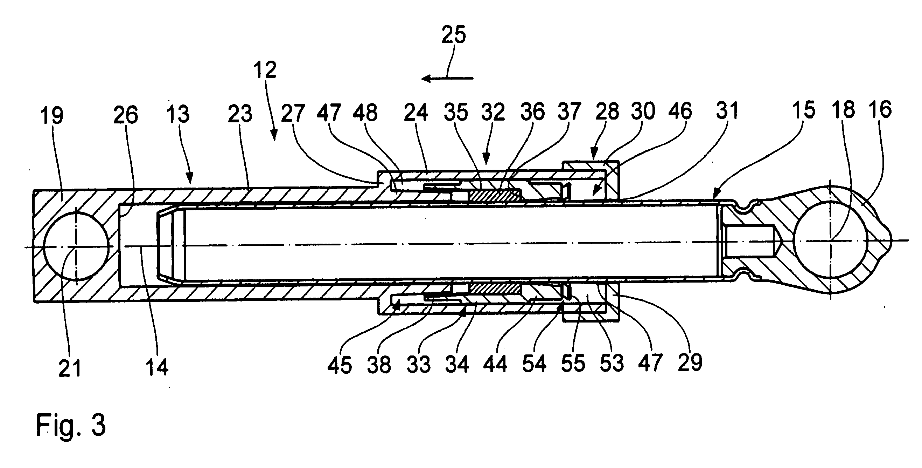

Im Folgenden wird unter Bezugnahme auf die Fig. 3 bis 6 der Aufbau des Reibungsdämpfers 12 genauer beschrieben. Das rohrförmige Gehäuse 13 des Reibungsdämpfers 12 weist einen Führungs-Abschnitt 23 und einen mit diesem einstückig ausgebildeten Aufnahme-Abschnitt 24 auf. Der Führungs-Abschnitt 23 ist in einer Einschub-Richtung 25 dem Aufnahme-Abschnitt 24 nachgeordnet. Das freie Ende des Führungs-Abschnitts 23, welches gleichzeitig das freie Ende des Gehäuses 13 bildet, ist mittels eines Bodens 26 verschlossen. Der Boden 26 ist einstückig mit dem Befestigungs-Element 19 ausgebildet. Der Führungs-Abschnitt 23 weist einen Innen-Durchmesser auf, der derart gewählt ist, dass der Stößel 15 innerhalb des Gehäuses 13 entlang der Einschub-Richtung 25 mit möglichst wenig Spiel geführt wird und haftreibungsfrei verschiebbar ist.

In Einschub-Richtung 25 vor dem Führungs-Abschnitt 23 ist der Aufnahme-Abschnitt 24 angeordnet. Der Aufnahme-Abschnitt 24 weist einen im Vergleich zu dem Innen-Durchmesser des Führungs-Abschnitts 23 größeren Innen-Durchmesser auf. Der Aufnahme-Abschnitt 24 ist mittels eines ringförmigen Anschlag-Bundes 27 an dem stößelseitigen Ende des Führungs-Abschnitts 23 befestigt.

An seinem dem Führungs-Abschnitt 23 abgewandten Ende ist der Aufnahme-Abschnitt 24 mittels einer Verschluss-Kappe 28 verschlossen. Die Verschluss-Kappe 28 weist einen ringförmigen Verschluss-Kappen-Bund 29 und einen daran befestigten rohrförmigen Befestigungs-Abschnitt 30 auf, wobei sich der Befestigungs-Abschnitt 30 entlang der Mittel-Längs-Achse 14 erstreckt und den Aufnahme-Abschnitt 24 umgreift. Das dem Führungs-Abschnitt 23 abgewandte Ende des Aufnahme-Abschnitts 24 liegt gegen den Verschluss-Kappen-Bund 29 an und die Verschluss-Kappe 28 ist mittels eines nicht näher dargestellten Rastmechanismus im Bereich des Befestigungs-Abschnitts 30 gegen Verschiebung gesichert. Der ringförmige Verschluss-Kappen-Bund 29 bildet eine Verschluss-Kappen-Öffnung 31 aus, in der der Stößel 15 mit möglichst wenig Spiel geführt wird.

Innerhalb des Gehäuses 13 ist im Bereich des Aufnahme-Abschnitts 24 eine Reibungs-Dämpfungs-Einheit 32 angeordnet. Die Reibungs-Dämpfungs-Einheit 32 weist einen entlang der Mittel-Längs-Achse 14 relativ zu dem Gehäuse 13 und dem Stößel 15 verschiebbaren Kolben 33 auf. Der Kolben 33 ist im Wesentlichen rohrförmig ausgebildet und umfasst einen mittig gelegenen Anpress-Abschnitt 34, in dem eine dem Stößel 15 zugewandte umlaufende Ringnut 35 angeordnet ist. In der Ringnut 35 ist ein ringförmig umlaufender, elastischer Reib-Belag 36 angeordnet, der gegen Seitenwände 37 der Ringnut 35 anliegt, sodass dieser von dem Kolben 33 teilweise umschlossen wird und relativ zu dem Kolben 33 gegen Verschiebung gesichert ist. Bei einer Relativbewegung zwischen dem Stößel 15 und dem Kolben 33 reibt der Reib-Belag 36 gegen den Stößel 15.

Ausgehend von der dem Gehäuse 13 zugewandten Seitenwand 37 erstreckt sich ein einstückig mit dem Anpress-Abschnitt 34 ausgebildeter erster Anschlag-Abschnitt 38. Der erste Anschlag-Abschnitt 38 ist rohrförmig ausgebildet und liegt nicht gegen den Aufnahme-Abschnitt 24 des Gehäuses 13 an. Der Anschlag-Abschnitt 38 weist entlang seines Innen-Umfangs mehrere gleichmäßig beabstandet angeordnete und sich entlang der Mittel-Längs-Achse 14 erstreckende sowie in Richtung des Reib-Belags 36 sich verjüngende Längs-Nuten 39 auf, welche sich bis zu dem Reib-Belag 36 erstrecken. Der Reib-Belag 36 liegt somit im Bereich der Nuten 39 in axialer Richtung frei. Jeweils zwei Nuten 39 liegen sich diametral gegenüber. Zwischen zwei nebeneinander angeordneten Nuten 39 befindet sich ein Keil 40, der sich in entgegengesetzter Richtung zu den Nuten 39 verjüngt und rampenförmig in Richtung der Seitenwand 37 verläuft sowie einstückig mit dieser ausgebildet ist. Jeder Keil 40 weist eine Keil-Stirnwand 41 und Keil-Seitenwände 42 auf, die jeweils einen Nutgrund 43 einer benachbarten Nut 39 begrenzen. Jeder Nutgrund 43 verläuft in Richtung des Reib-Belags 36 ebenfalls rampenförmig.

Entsprechend dem ersten Anschlag-Abschnitt 38 erstreckt sich ausgehend von der dem Stößel 15 zugewandten Seitenwand 37 ein zweiter Anschlag-Abschnitt 44. Der zweite Anschlag-Abschnitt 44 ist entsprechend dem ersten Anschlag-Abschnitt 38 aufgebaut und einstückig mit dem Anpress-Abschnitt 34 ausgebildet. Die Nuten 39 und Keile 40 des zweiten Anschlag-Abschnitts 44 sind gegenüber dem ersten Anschlag-Abschnitt 38 verdreht angeordnet. Das bedeutet, dass einer Nut 39 des zweiten Anschlag-Abschnitts 43 ein Keil 40 des ersten Anschlag-Abschnitts 38 gegenüberliegt und umgekehrt. Der Kolben 33 kann zur einfacheren Montage des Reib-Belags 36 auch mehrteilig ausgestaltet sein.

Zur Begrenzung der Bewegung des Kolbens 33 mit dem Reib-Belag 36 und zur Erreichung einer Dämpfungsarbeit weist die Reibungs-Dämpfungs-Einheit 32 ein gehäuseseitiges erstes Anschlag-Element 45 und ein stößelseitiges zweites Anschlag-Element 46 auf. Die Begrenzung der Bewegung des Kolbens 33 erfolgt durch Anschlagen des Reib-Belags 36 oder des Reib-Belags 36 und des Kolbens 33 an einem der Anschlag-Elemente 45, 46. Das erste Anschlag-Element 45 umfasst den Anschlag-Bund 27 und mehrere Anschlag-Stempel 47, die sich ausgehend von dem Anschlag-Bund 27 entlang der Mittel-Längs-Achse 14 erstrecken. Die Anschlag-Stempel 47 sind einstückig mit dem Anschlag-Bund 27 und dem Führungs-Abschnitt 23 des Gehäuses 13 ausgebildet. Die Anschlag-Stempel 47 sind derart angeordnet und ausgebildet, dass sie eine Verlängerung des Führungs-Abschnitts 23 bilden, sodass der Stößel 15 durch die Anschlag-Stempel 47 des ersten Anschlag-Elements 45 zusätzlich geführt wird. Die Anschlag-Stempel 47 sind weiterhin derart ausgestaltet und angeordnet, dass der Kolben 33 mit den Nuten 39 des ersten Anschlag-Abschnitts 38 die Anschlag-Stempel 47 umgreifen kann, sodass der Kolben 33 in einen ersten ringförmigen Zwischenraum 48 zwischen dem Aufnahme-Abschnitt 24 und den Anschlag-Stempeln 47 verschiebbar ist. Eine detaillierte Beschreibung der Anschlag-Stempel 47 und deren Anordnung erfolgt nachfolgend im Zusammenhang mit der Beschreibung des zweiten Anschlag-Elements 46.

Das zweite Anschlag-Element 46 umfasst den Verschluss-Kappen-Bund 29 und mehrere Anschlag-Stempel 47, die einstückig mit dem Verschluss-Kappen-Bund 29 ausgebildet sind und sich entlang der Mittel-Längs-Achse 14 erstrecken. Die Anschlag-Stempel 47 sind entlang eines Kreises um die Mittel-Längs-Achse 14 angeordnet und bilden eine bündige Verlängerung der Verschluss-Kappen-Öffnung 31, sodass der Stößel 15 durch die Anschlag-Stempel 47 zusätzlich geführt wird. Zu diesem Zweck sind die Anschlag-Stempel 47 als Kreisringsegmente ausgestaltet, wobei eine dem Stößel 15 zugewandte Führungs-Wand 49 entsprechend dem AußenUmfang des Stößels 15 gewölbt ist. Jeder Anschlag-Stempel 47 verjüngt sich ausgehend von dem Verschluss-Kappen-Bund 29 in Richtung des Reib-Belags 36 und weist zwei Anschlag-Stempel-Seitenwände 50 und eine Anschlag-Stempel-Stirnwand 51 auf. Außerdem weist jeder Anschlag-Stempel 47 an seiner dem Stößel 15 abgewandten Seite eine Anschlag-Stempel-Außenwand 52 auf, die in Richtung des Verschluss-Kappen-Bundes 29 rampenförmig zuläuft. Jeweils zwei Anschlag-Stempel 47 liegen sich diametral gegenüber, wobei diese zwei Anschlag-Stempel 47 entlang der Mittel-Längs-Achse 14 eine einheitliche Länge, jedoch im Vergleich zu den verbleibenden Anschlag-Stempeln 47 eine abweichende Länge, aufweisen. Es ist auch eine andere Anordnung möglich. Die Anschlag-Stempel 47 des zweiten Anschlag-Elements 46 bilden zusammen mit dem Aufnahme-Abschnitt 24 des Gehäuses 13 einen zweiten ringförmigen Zwischenraum 53, in den der zweite Anschlag-Abschnitt 44 des Kolbens 33 verschiebbar ist.

Der Detailaufbau des ersten Anschlag-Elements 45 entspricht dem des zweiten Anschlag-Elements 46, wobei die Anschlag-Stempel 47 des zweiten Anschlag-Elements 46 im Vergleich zu denen des ersten Anschlag-Elements 45 versetzt angeordnet sind, um in die versetzt angeordneten Nuten 39 des zweiten Anschlag-Abschnitts 44 eingreifen zu können. Vorzugsweise weisen die Anschlag-Elemente 45, 46 jeweils vier Anschlag-Stempel 47 auf. Durch eine derartige Anzahl der Anschlag-Stempel 47 wird der konstruktive Aufwand optimiert.

Der Kolben 33 und die Anschlag-Elemente 45, 46 sind derart ausgebildet, dass mindestens einer der Anschlag-Stempel 47 zumindest teilweise in einer der Nuten 39 angeordnet ist. Durch eine derartige Ausbildung des Kolbens 33 und der Anschlag-Elemente 45, 46 wird sichergestellt, dass entweder mindestens ein Anschlag-Stempel 47 des ersten Anschlag-Elements 45 oder mindestens ein Anschlag-Stempel 47 des zweiten Anschlag-Elements 46 in Eingriff mit einer der Nuten 39 des Kolbens 33 ist, wodurch eine Verdrehsicherung des Kolbens 33 relativ zu den Anschlag-Elementen 45, 46 erzielt wird.

Prinzipiell kann die Ausgestaltung der Anschlag-Stempel 47, insbesondere deren Länge und Form, beliebig sein, solange die Anschlag-Stempel 47 in ihrer Lage und Form mit den entsprechenden Nuten 39 korrespondieren, sodass die Anschlag-Stempel 47 mit dem Reib-Belag 36 zusammen wirken können. Bevorzugt sind Stempel verschiedener Länge, um eine kontinuierliche Dämpfung mit progressivem Anstieg zu gewährleisten.

Zur Dämpfung des Anschlagens des Kolbens 33 an dem Anschlag-Bund 27 oder dem Verschluss-Kappen-Bund 29 bei extrem großen Schwingungsamplituden sind zwischen dem Kolben 33 und den Anschlag-Elementen 45, 46 Anschlagpuffer 54 angeordnet. Die Anschlag-Abschnitte 38, 44 des Kolbens 33 weisen jeweils zwei Anschlagpuffer 54 auf, die an den Keil-Stimwänden 41 von zwei einander gegenüberliegenden Keilen 40 ausgebildet sind. Die Anschlagpuffer 54 des ersten Anschlag-Abschnitts 38 sind um die Mittel-Längs-Achse 14 versetzt zu den Anschlagpuffern 54 des zweiten Anschlag-Abschnitts 44 angeordnet.

Die Anschlagpuffer 54 sind identisch ausgebildet, sodass nachfolgend lediglich ein Anschlagpuffer 54 beschrieben wird. Der Anschlagpuffer 54 weist zwei einteilig mit dem Keil 40 des Kolbens 33 ausgebildete und elastisch verbiegbare Anschlagpuffer-Elemente 55 in Form von gebogenen Zungen auf, die ausgehend von den Keil-Seitenwänden 42 aufeinander zulaufen. Die Anschlagpuffer-Elemente 55 springen entlang der Mittel-Längs-Achse 14 über die Keil-Stirnwände 41 der benachbarten Keile 40 vor und verjüngen sich ausgehend von den Keil-Seitenwänden 42 entlang der Mittel-Längs-Achse 14 betrachtet. Die Anschlagpuffer-Elemente 55 und die zugehörige Keil-Stirnwand 41 begrenzen im Wesentlichen eine Anschlagpuffer-Ausnehmung 56, die sich teilweise in den Kolben 33 erstreckt, sodass die zu den Anschlagpuffer-Elementen 55 gehörige Keil-Stirnwand 41 im Vergleich zu den Keil-Stirnwänden 41 der benachbarten Keile 40 zurückgesetzt ist. Die Anschlagpuffer-Elemente 55 sind in die Anschlagpuffer-Ausnehmung 56 verbiegbar. Zwischen den aufeinander zulaufenden Anschlagpuffer-Elementen 55 ist eine Anschlagpuffer-Durchbrechung 57 ausgebildet, sodass die Anschlagpuffer-Elemente 55 mittig beabstandet voneinander sind und sich nicht berühren. Relativ zu der Anschlagpuffer-Ausnehmung 56 ist gegenüberliegend zu der Anschlagpuffer-Durchbrechung 57 eine mit der Keil-Stirnwand 41 und den Anschlagpuffer-Elementen 55 einteilig und bogenförmig ausgebildete Anschlagpuffer-Begrenzung 58 angeordnet. Die Anschlagpuffer-Begrenzung 58 erstreckt sich zur Begrenzung des Verbiegens der Anschlagpuffer-Elemente 55 ausgehend von der Keil-Stirnwand 41 entlang der Mittel-Längs-Achse 14 in die Anschlagpuffer-Ausnehmung 56. Alternativ kann die Anschlagspuffer-Begrenzung 58 auch entfallen, so dass das Verbiegen der Anschlagpuffer-Elemente 55 durch die zugehörige Keil-Stirnwand 41 begrenzt wird. Ferner können die Anschlagpuffer-Elemente 55 auch unterschiedlich ausgebildet sein.

Alternativ können die Anschlagpuffer-Elemente 55 auch einteilig mit den Anschlag-Elementen 45, 46 ausgebildet sein. In diesem Fall sind die Anschlagpuffer-Begrenzungen 58 gleichzeitig Teil der Anschlag-Elemente 45, 46. Beispielsweise können die Anschlagpuffer-Elemente 55 an dem Anschlag-Bund 27 und dem Verschluss-Kappen-Bund 29 angeordnet sein.

Im Folgenden wird die Funktionsweise des Reibungsdämpfers 12 beim Betrieb der Trommelwaschmaschine genauer beschrieben. Zunächst wird das Wasch-Aggregat 2 mit Wäsche beladen und die Wasch-Trommel mittels des Antriebs-Motors 3 und des Riemen-Triebs 4 auf Drehzahl gebracht. Zunächst wird das Dämpfungsverhalten des Reibungsdämpfers 12 bei kleinen Schwingungsamplituden beschrieben. Diese kleinen Schwingungsamplituden treten bei sogenannten unkritischen Drehzahlen, beispielsweise beim Schleudern der Trommelwaschmaschine, auf. In diesem Fall ist die Bewegung des Stößels 15 relativ zu dem Gehäuse 13 entlang der Mittel-Längs-Achse 14 derart gering, dass der Kolben 33 mit dem Reib-Belag 36 nicht mit dem ersten und zweiten Anschlag-Element 45, 46 in Berührung kommt. Der Kolben 33 führt aufgrund der Haftreibung des Reib-Belags 36 relativ zu dem Stößel 15 keine Bewegung aus, sodass der Reib-Belag 36 nicht an dem Stößel 15 reibt. Dieser Zustand wird als reibungsfreier Leerhub bezeichnet. Der Reibungsdämpfer 12 weist in diesem Zustand ein geringes Dämpfungsverhalten auf, das durch die sonstigen Reibungsverluste bei der Bewegung des Stößels 15 charakterisiert ist. Das Gehäuse 13 und der Stößel 15 sind in diesem Zustand weitestgehend entkoppelt.

Ist im Gegensatz dazu die Drehzahl der Trommelwaschmaschine in einem Bereich um eine sogenannte kritische Drehzahl oder liegt eine größere Unwucht vor, so führt der Stößel 15 relativ zu dem Gehäuse 13 große Schwingungsamplituden aus. In diesem Fall tritt der Kolben 33 mit dem Reib-Belag 36 in Wechselwirkung mit den Anschlag-Elementen 45, 46 und der Kolben 33 führt relativ zu dem Stößel 15 eine Bewegung aus, sodass der Reib-Belag 36 an dem Stößel 15 reibt. Wird der Stößel 15 ausgehend von der in Fig. 3 dargestellten Position in Einschub-Richtung 25 bewegt, so wird der Kolben 33 aufgrund der Haftreibung zwischen dem Reib-Belag 36 und dem Stößel 15 zunächst in Einschub-Richtung 25 mitgenommen. Mit zunehmender Einschub-Tiefe wird der erste Anschlag-Abschnitt 38 mit den Nuten 39 zunehmend über die Anschlag-Stempel 47 des ersten Anschlag-Elements 45 geführt. Berühren die Anschlag-Stempel 47 mit ihrer Anschlag-Stempel-Stirnwand 51 den im Bereich der Nuten 39 freiliegenden Reib-Belag 36, so wird die Bewegung des Kolbens 33 gebremst und es kommt zu einer Relativbewegung zwischen dem Reib-Belag 36 und dem Stößel 15. Der Reib-Belag 36 reibt an dem Stößel 15 und erzeugt ein Dämpfungsverhalten. Das Dämpfungsverhalten ist abhängig von der Geschwindigkeit der Relativbewegung und unabhängig von der Eintauchtiefe der Anschlag-Stempel 47 in den Reib-Belag 36. Durch die unterschiedliche Länge der Anschlag-Stempel 47 tauchen diese sukzessive in den Reib-Belag 36 ein, sodass es nicht zu einer schlagartigen Verzögerung des Kolbens 33 und folglich zu keinem schlagartigen Kraftanstieg auf das Maschinen-Gestell 8 kommt. Dadurch, dass jeweils zwei gegenüberliegend angeordnete Anschlag-Stempel 47 eine einheitliche Länge aufweisen, ist zudem sichergestellt, dass sich der Kolben 33 auf dem Stößel 15 nicht verkantet. Durch das Eintauchen der Anschlag-Stempel 47 wirkt der elastische Reib-Belag 36 somit der Bewegung des Kolbens 33 entgegen und puffert das Auftreffen der Anschlag-Stempel 47 auf den Reib-Belag 36.

Bei einer Bewegungsumkehr des Stößels 15 wird der Kolben 33 zunächst wieder aufgrund der Haftreibung zwischen dem Reib-Belag 36 und dem Stößel 15 entgegen der Einschub-Richtung 25 mitgenommen, sodass sich der Kolben 33 relativ zu dem Stößel 15 nicht bewegt. Mit zunehmender Bewegung entgegen der Einschub-Richtung 25 wird der zweite Anschlag-Abschnitt 44 mit den Nuten 39 zunehmend über die Anschlag-Stempel 47 des zweiten Anschlag-Elements 46 bewegt. Durch das Eintauchen der Anschlag-Stempel 47 in den Reib-Belag 36 wird die Bewegung des Kolbens 33 gebremst, sodass der Reib-Belag 36 eine Relativbewegung zu dem Stößel 15 ausführt und an dem Stößel 15 reibt. Das Zusammenwirken des zweiten Anschlag-Elements 46 mit dem Reib-Belag 36 entspricht dem oben beschriebenen Eintauchverhalten des ersten Anschlag-Elements 45. Bei einer erneuten Bewegungsumkehr des Stößels 15 wird der Kolben 33 aufgrund der Haftreibung zwischen dem Reib-Belag 36 und dem Stößel 15 wieder in Einschub-Richtung 25 mitgenommen. Der beschriebene Bewegungszyklus wiederholt sich nun.

Ist die Schwingungsamplitude des Reibungsdämpfers 12 derart groß, dass zur Begrenzung der Bewegung des Kolbens 33 die Pufferwirkung des Reib-Belags 36 nicht ausreicht, so treten die Anschlagpuffer 54 in Funktion. Bei extrem großen Schwingungsamplituden schlagen die Anschlagpuffer-Elemente 55 der Anschlagpuffer 54 gegen den Anschlag-Bund 27 des ersten Anschlag-Elements 45 und gegen den Verschluss-Kappen-Bund 29 des zweiten Anschlag-Elements 46 an. Mit zunehmender Bewegung des Kolbens 33, beispielsweise in Einschub-Richtung 25, verbiegen sich die elastischen Anschlagpuffer-Elemente 55 in Richtung der Anschlagpuffer-Begrenzung 58 und wirken somit dem Anschlagen des Kolbens 33 dämpfend entgegen. Kommt die Bewegung des Kolbens 33 zum Stillstand, so federn die elastischen Anschlagpuffer-Elemente 55 wieder aus und bewegen den Kolben 33 solange entgegen die Einschub-Richtung 25 bis sie entspannt sind. Bei extrem großen Schwingungsamplituden wird das Verbiegen der Anschlagpuffer-Elemente 55 durch Anschlagen an die Anschlagpuffer-Begrenzung 58 oder, falls eine Anschlagpuffer-Begrenzung 58 nicht vorgesehen ist, durch Anschlagen an die zugehörige Keil-Steilwand 41 begrenzt. Gleichzeitig schlagen die Keil-Stirnwände 41 der zu den Anschlagpuffem 54 benachbarten Keile 40 an den Anschlag-Bund 27 an. Bei einer Bewegungsumkehr des Stößels 15 wird der Kolben 33 entgegen der Einschub-Richtung 25 mitgenommen, wobei sich der beschriebene Vorgang beim Anschlagen des Kolbens 33 an den Verschluss-Kappen-Bund 29 wiederholt.

Durch die Anschlagpuffer 54 wird ein hartes Anschlagen des Kolbens 33 an den Anschlag-Elementen 45, 46 verhindert, so dass der Reibungsdämpfer 12 auch bei extrem großen Schwingungsamplituden geräuscharm ist. Dadurch, dass mittels der Anschlagpuffer 54 ein tiefes Eintauchen der Anschlag-Elemente 45, 46 in den Reib-Belag 36 vermindert wird, wird die Lebensdauer des Reibungsdämpfers 12, insbesondere des Reib-Belags 36, erhöht. Der Reibungsdämpfer 12 weist somit eine hohe Robustheit auf. Die einteilige Ausbildung der Anschlagpuffer-Elemente 55 mit dem Kolben 33 oder alternativ mit den Anschlag-Elementen 45, 46 ermöglicht eine einfache und kostengünstige Herstellung des Reibungsdämpfers 12.

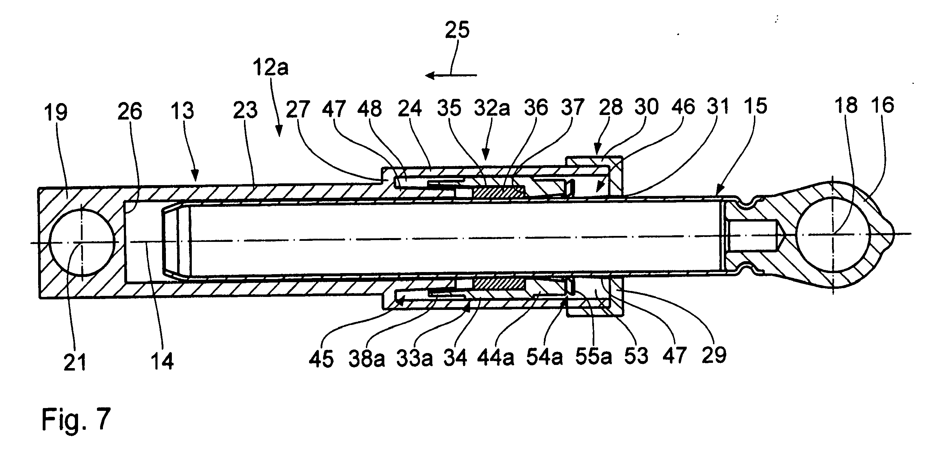

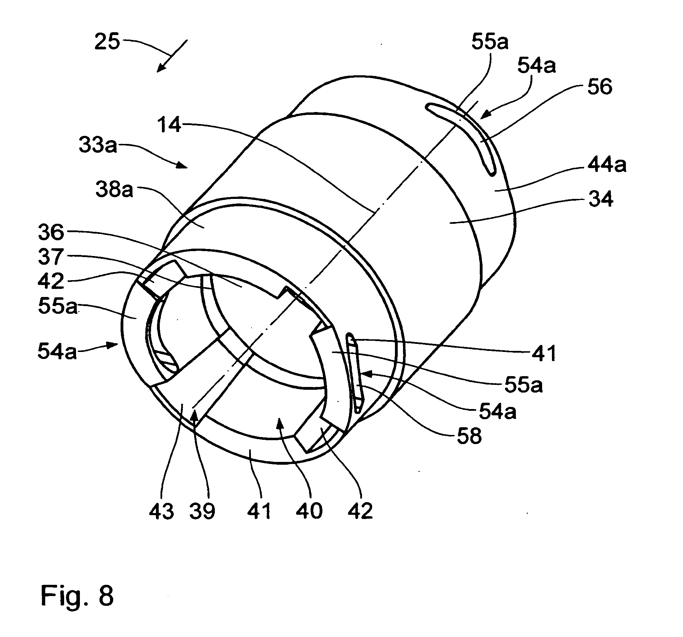

Nachfolgend wird unter Bezugnahme auf die Fig. 7 und 8 ein zweites Ausführungsbeispiel der Erfindung beschrieben. Konstruktiv identische Teile erhalten dieselben Bezugszeichen, wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten "a". Der wesentliche Unterschied gegenüber dem ersten Ausführungsbeispiel besteht darin, dass die Anschlagpuffer 54a jeweils ein durchgehendes und sich mittig verschmälerndes Anschlagpuffer-Element 55a in Form eines Bogens aufweisen, das die Anschlagpuffer-Ausnehmung 56 auf der der Keil-Stirnwand 41 gegenüberliegenden Seite vollständig begrenzt. Eine Anschlagpuffer-Durchbrechung ist nicht vorgesehen. Alternativ können die Anschlagpuffer 54a auch an dem Anschlag-Bund 27 des ersten Anschlag-Elements 45 und dem Verschluss-Kappen-Bund 29 des zweiten Anschlag-Elements 46 angeordnet sein. Hinsichtlich der Funktionsweise des Reibungsdämpfers 12a wird auf das erste Ausführungsbeispiel verwiesen.

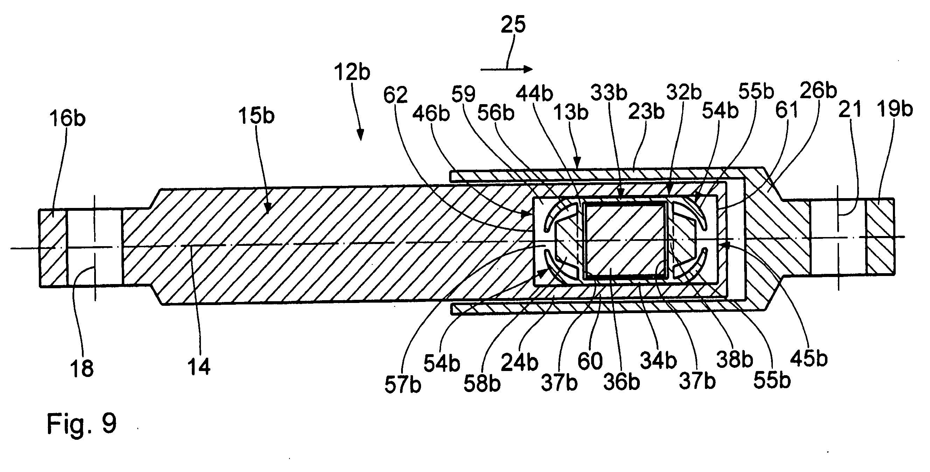

Nachfolgend wird unter Bezugnahme auf die Fig. 9 ein drittes Ausführungsbeispiel der Erfindung beschrieben. Konstruktiv identische Teile erhalten dieselben Bezugszeichen, wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten "b". Der wesentliche Unterschied gegenüber den vorangegangenen Ausführungsbeispielen besteht in der Ausgestaltung und Anordnung des Kolbens 33b. Das Gehäuse 13b und der Stößel 15b des Reibungsdämpfers 12b sind im Querschnitt rechteckförmig ausgebildet, wobei das Gehäuse 13b lediglich den Führungs-Abschnitt 23b aufweist. Der Aufnahme-Abschnitt 24b ist an dem dem Gehäuse 13b zugewandten Ende des Stößels 15b ausgebildet. Zur Aufnahme des Kolbens 33b weist der Stößel 15b im Bereich des Aufnahme-Abschnitts 24b eine Stößel-Ausnehmung 59 auf. Die Stößel-Ausnehmung 59 weist entlang der Mittel-Längs-Achse 14 verlaufende Stößel-Seitenwände 60 sowie eine quer zu der Mittel-Längs-Achse 14 verlaufende, gehäuseseitige erste Stößel-Stirnwand 61 und eine entsprechend verlaufende, stößelseitige zweite Stößel-Stirnwand 62 auf. Innerhalb der Stößel-Ausnehmung 59 ist der Kolben 33b angeordnet, wobei die erste Stößel-Stirnwand 61 das erste Anschlag-Element 45b und die zweite Stößel-Stirnwand 62 das zweite Anschlag-Element 46b bildet.

Der Kolben 33b ist als rechteckförmiger Rahmen ausgebildet, wobei der ebenfalls rechteckförmige Reib-Belag 36b innerhalb des Kolbens 33b angeordnet ist. Der Reib-Belag 36b wird zu den Stößel-Seitenwänden 60 und den Stößel-Stirnwänden 61, 62 hin von dem Kolben 33b umschlossen, wohingegen der Reib-Belag 36b mit seinen freiliegenden Seiten gegen das Gehäuse 13b reibt. Alternativ können auch mehrere Reib-Beläge 36b vorgesehen sein, die auf einem Tragkörper angeordnet sind. Die Anschlag-Abschnitte 38b, 44b des Kolbens 33b sind als Wände ausgebildet, wobei Keile und Nuten für Anschlag-Stempel nicht vorgesehen sind. Die Anschlagpuffer 54b sind unmittelbar an den Anschlag-Abschnitten 38b, 44b angeordnet. Die Anschlagpuffer-Elemente 55b sind einteilig an dem Kolben 33b und in Form einer gebogenen Zunge ausgebildet. Die in den Anschlagpuffer-Ausnehmungen 56b angeordneten Anschlagpuffer-Begrenzungen 58b sind ebenfalls einteilig an dem Kolben 33b und im Wesentlichen trapezförmig ausgebildet. Alternativ können die Anschlagpuffer-Begrenzungen 58b vollständig entfallen oder als zumindest teilweise elastisches Einlegeteil, insbesondere aus PU-Schaum, ausgebildet sein. Weiterhin können die Anschlagpuffer 54b auch mit einem Anschlagpuffer-Element 54b in Form eines durchgehenden Bogens entsprechend dem zweiten Ausführungsbeispiel ausgebildet sein.

Bei kleinen Schwingungsamplituden des Reibungsdämpfers 12b ist die Bewegung des Stößels 15b relativ zu dem Gehäuse 13b derart gering, dass der Kolben 33b nicht mit den Anschlag-Elementen 45b, 46b in Berührung kommt. Der Kolben 33b führt aufgrund der Haftreibung des Reib-Belags 36b relativ zu dem Gehäuse 13b keine Bewegung aus, so dass der Reibungsdämpfer 12b ein geringes Dämpfungsverhalten aufweist. Bei großen Schwingungsamplituden tritt der Kolben 33b in Wechselwirkung mit den Anschlag-Elementen 45b, 46b und der Kolben 33b führt relativ zu dem Gehäuse 13b eine Bewegung aus, so dass der Reib-Belag 36b an dem Gehäuse 13b reibt. Zum Dämpfen des Anschlagens des Kolbens 33b an die Anschlag-Elemente 45b, 46b verbiegen sich die Anschlagpuffer-Elemente 55b elastisch in die Anschlagpuffer-Ausnehmungen 56b. Das Verbiegen wird im Falle der einteilig ausgebildeten Anschlagpuffer-Begrenzungen 58b hart begrenzt, wohingegen im Falle von als elastische Einlegeteile ausgebildeten Anschlagpuffer-Begrenzungen 58b das Verbiegen dämpfend begrenzt wird. Die als Einlegeteile ausgebildeten Anschlagpuffer-Begrenzungen 58b sind aufgrund der Anschlagpuffer-Elemente 55b wenig belastet und weisen somit eine lange Lebensdauer auf. Hinsichtlich der weiteren Funktionsweise wird auf die vorangegangenen Ausführungsbeispiele verwiesen.

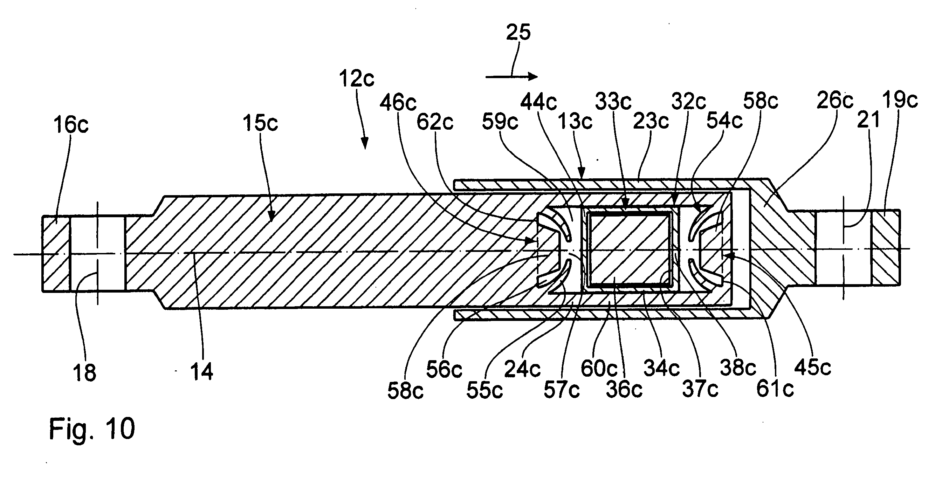

Nachfolgend wird unter Bezugnahme auf die Fig. 10 ein viertes Ausführungsbeispiel der Erfindung beschrieben. Konstruktiv identische Teile erhalten dieselben Bezugszeichen, wie bei den vorangegangenen Ausführungsbeispielen, auf deren Beschreibung hiermit verwiesen wird. Konstruktiv unterschiedliche, jedoch funktionell gleichartige Teile erhalten dieselben Bezugszeichen mit einen nachgestellten "c". Der wesentliche Unterschied gegenüber dem dritten Ausführungsbeispiel besteht darin, dass die Anschlagpuffer-Elemente 55c der Anschlagpuffer 54c einteilig mit den Anschlag-Elementen 45c, 46c des Reibungsdämpfers 12c ausgebildet sind. Die Anschlagpuffer-Begrenzungen 58c sind gleichzeitig Teil der Anschlag-Elemente 45c, 46c. Alternativ können die Anschlagpuffer-Begrenzungen 58c als teilweise elastische Einlegeteile, insbesondere aus PU-Schaum, ausgebildet sein. Weiterhin können die Anschlagpuffer-Elemente 55c als durchgehende Bögen ausgebildet sein. Hinsichtlich der Funktionsweise wird auf die vorangegangenen Ausführungsbeispiele verwiesen.

## Patentansprüche

1. Dämpfer (12; 12a; 12b; 12c), insbesondere für Waschmaschinen mit Schleudergang, mit
a. einem eine Mittel-Längs-Achse (14) aufweisenden Gehäuse (13; 13b; 13c),
b. einem in dem Gehäuse (13; 13b; 13c) entlang der Mittel-Längs-Achse (14) verschiebbaren und aus dem Gehäuse (13; 13b; 13c) herausgeführten Stößel (15; 15b; 15c),
c. an freien Enden des Gehäuses (13; 13b; 13c) und des Stößels (15; 15b; 15c) angeordneten Befestigungs-Elementen (16, 19; 16b, 19b; 16c, 19c), und
d. einer innerhalb des Gehäuses (13; 13b; 13c) angeordneten Reibungs-Dämpfungs-Einheit (32; 32a; 32b; 32c) zur Erzeugung einer Dämpfung, mit mindestens einem relativ zu dem Gehäuse (13; 13b; 13c) und dem Stößel (15; 15b; 15c) entlang der Mittel-Längs-Achse (14) verschiebbaren Kolben (33; 33a; 33b; 33c),
**dadurch gekennzeichnet, dass** die Reibungs-Dämpfungs-Einheit (32; 32a; 32b; 32c) weiterhin umfasst
e. mindestens einen von dem mindestens einen Kolben (33; 33a; 33b; 33c) teilweise umschlossenen Reibbelag (36; 36b; 36c),
f. mindestens ein Anschlag-Element (45, 46; 45b, 46b; 45c, 46c) zur Begrenzung der Bewegung des mindestens einen Kolbens (33; 33a; 33b; 33c) entlang der Mittel-Längs-Achse (14) durch Anschlagen an dem mindestens einen Anschlag-Element (45, 46; 45b, 46b; 45c, 46c) und
g. mindestens einen zwischen dem mindestens einen Kolben (33; 33a; 33b; 33c) und dem mindestens einen Anschlag-Element (45, 46; 45b, 46b; 45c, 46c) angeordneten Anschlagpuffer (54; 54a; 54b; 54c) zur Dämpfung des Anschlagens des Kolbens (33; 33a; 33b; 33c), wobei der mindestens eine Anschlagpuffer (54; 54a; 54b; 54c) mindestens ein elastisch verbiegbares und einteilig mit dem mindestens einen Kolben (33; 33a; 33b; 33c) oder mit dem mindestens einen Anschlag-Element (45, 46; 45b, 46b; 45c, 46c) ausgebildetes Anschlagpuffer-Element (55; 55a; 55b; 55c) aufweist,
h. wobei das mindestens eine Anschlagpuffer-Element (55; 55a; 55b; 55c) aus Kunststoff ausgebildet ist.

2. Dämpfer nach Anspruch 1, **dadurch gekennzeichnet, dass** der mindestens eine Anschlagpuffer (54; 54a; 54b; 54c) mindestens eine Anschlagpuffer-Ausnehmung (56; 56b; 56c) aufweist, wobei diese teilweise von dem mindestens einen Anschlagpuffer-Element (55; 55a; 55b; 55c) begrenzt wird und derart ausgebildet ist, dass das mindestens eine Anschlagpuffer-Element (55; 55a; 55b; 55c) in die mindestens eine Anschlagpuffer-Ausnehmung (56; 56b; 56c) verbiegbar ist.

3. Dämpfer nach einem der Ansprüche 1 bis 2, **dadurch gekennzeichnet, dass** das mindestens eine Anschlagpuffer-Element (55; 55a; 55b; 55c) bogenförmig ausgebildet ist.

4. Dämpfer nach Anspruch 3, **dadurch gekennzeichnet, dass** zur Ausbildung des mindestens einen Anschlagpuffers (54; 54b; 54c) zwei aufeinander zulaufende und sich verjüngende Anschlagpuffer-Elemente (55; 55b; 55c) vorgesehen sind.

5. Dämpfer nach Anspruch 3, **dadurch gekennzeichnet, dass** zur Ausbildung des mindestens einen Anschlagpuffers (54a) ein durchgehendes und sich mittig verschmälerndes Anschlagpuffer-Element (55a) vorgesehen ist.

6. Dämpfer nach einem der Ansprüche 2 bis 5, **dadurch gekennzeichnet, dass** zur Begrenzung des Verbiegens des mindestens einen Anschlagpuffer-Elements (55; 55a; 55b; 55c) mindestens eine Anschlagpuffer-Begrenzung (58; 58b; 58c) in der mindestens einen Anschlagpuffer-Ausnehmung (56; 56b; 56c) angeordnet ist.

7. Dämpfer nach Anspruch 6, **dadurch gekennzeichnet, dass** die mindestens eine Anschlagpuffer-Begrenzung (58; 58b; 58c) einteilig mit dem mindestens einen Anschlagpuffer-Element (55; 55a; 55b; 55c) ausgebildet ist.

## Claims

1. A damper (12; 12a; 12b; 12c), in particular for spin-drying washing machines, comprising
a. a casing (13; 13b; 13c) which has a central longitudinal axis (14);
b. a tappet (15; 15b; 15c) which is displaceable in the casing (13; 13b; 13c) in a direction of the central longitudinal axis (14) and is extended out of the casing (13; 13b; 13c);
c. fastening elements (16, 19; 16b; 19b; 16c, 19c) which are mounted on free ends of the casing (13; 13b; 13c) and the tappet (15; 15b; 15c); and
d. a frictional damping unit (32; 32a; 32b; 32c) which is disposed inside the casing (13; 13b; 13c), producing damping action, comprising at least one piston (33; 33a; 33b; 33c) which is displaceable in relation to the casing (13; 13b; 13c) and the tappet (15; 15b; 15c) in the direction of the central longitudinal axis (14);
**characterized in that** the frictional damping unit (32; 32a; 32b; 32c) further comprises
e. at least one frictional lining (36; 36b; 36c) which is partially enclosed by the at least one piston (33; 33a; 33b; 33c);
f. at least one stop element (45, 46; 45b, 46b; 45c, 46c) for limitation of the motion of the at least one piston (33; 33a; 33b; 33c) in the direction of the central longitudinal axis (14) by strike against the at least one stop element (45, 46; 45b, 46b; 45c, 46c); and
g. at least one buffer stop (54; 54a; 54b; 54c) which is disposed between the at least one piston (33; 33a; 33b; 33c) and the at least one stop element (45, 46; 45b, 46b; 45c, 46c), damping the stop of the piston (33; 33a; 33b; 33c), the at least one buffer stop (54; 54a; 54b; 54c) having at least one flexibly pliable buffer stop element (55; 55a; 55b; 55c) which is integral with the at least one piston (33; 33a; 33b; 33c) or the at least one stop element (45, 46; 45b, 46b; 45c, 46c),
h. wherein the at least one buffer stop element (55; 55a; 55b; 55c) is made of plastic material.

2. A damper according to claim 1, **characterized in that** the at least one buffer stop (54; 54a; 54b; 54c) comprises at least one buffer stop recess (56; 56b; 56c) which is partially defined by the at least one buffer stop element (55; 55a; 55b; 55c) and configured such that the at least one buffer stop element (55; 55a; 55b; 55c) is able to be bent into the at least one buffer stop recess (56; 56b; 56c).

3. A damper according to one of claims 1 to 2, **characterized in that** the at least one buffer stop element (55; 55a; 55b; 55c) is arched.

4. A damper according to claim 3, **characterized in that** two tapering buffer stop elements (55; 55b; 55c) which run toward each other are provided, constituting the at least one buffer stop (54, 54b; 54c).

5. A damper according to claim 3, **characterized in that** a continuous buffer stop element (55a) which narrows centrically is provided, constituting the at least one buffer stop (54a).

6. A damper according to one of claims 2 to 5, **characterized in that** at least one buffer stop limit (58; 58b; 58c) is disposed in the at least one buffer stop recess (56; 56b; 56c), defining the bending of the at least one buffer stop element (55; 55a; 55b; 55c).

7. A damper according to claim 6, **characterized in that** the at least one buffer stop limit (58; 58b; 58c) and the at least one buffer stop element (55; 55a; 55b; 55c) are one piece.

## Revendications

1. Amortisseur (12 ; 12a ; 12b ; 12c), destiné en particulier à des machines à laver à tambour avec fonction essorage, comprenant
a. un carter (13; 13b ; 13c) présentant un axe longitudinal médian (14),
b. un poussoir (15 ; 15b ; 15c) monté de manière à pouvoir coulisser dans le carter (13 ; 13b ; 13c) et ressortant du carter (13 ; 13b ; 13c),
c. des éléments de fixation (16, 19 ; 16b, 19b ; 16c, 19c) disposés sur l'extrémité libre du carter (13 ; 13b ; 13c) et du poussoir (15 ; 15b ; 15c), et
d. une unité d'amortissement par friction (32 ; 32a ; 32b ; 32c) disposée à l'intérieur du carter (13 ; 13b ; 13c) pour réaliser un amortissement, avec au moins un piston (33 ; 33a ; 33b ; 33c) déplaçable relativement au carter (13 ; 13b ; 13c) et au poussoir (15 ; 15b ; 15c) le long de l'axe longitudinal médian (14),
**caractérisé en ce que** l'unité d'amortissement par friction (32 ; 32a ; 32b ; 32c) comprend en outre
e. au moins une garniture de friction (36 ; 36b ; 36c) partiellement entourée par le ou les pistons (33 ; 33a ; 33b ; 33c),
f. au moins un élément de butée (45, 46 ; 45b, 46b ; 45c, 46c) pour limiter le déplacement du ou des pistons (33 ; 33a ; 33b ; 33c) le long de l'axe longitudinal médian (14), par butée contre le ou les éléments de butée (45, 46 ; 45b, 46b ; 45c, 46c), et
g. au moins un tampon de butée (54 ; 54a ; 54b ; 54c) disposé entre le ou les pistons (33 ; 33a ; 33b ; 33c) et le ou les éléments de butée (45, 46 ; 45b, 46b ; 45c, 46c), pour amortir la butée du piston (33 ; 33a ; 33b ; 33c), le ou les tampons de butée (54 ; 54a ; 54b ; 54c) comportant au moins un élément de tampon de butée (55 ; 55a ; 55b ; 55c) élastiquement déformable et réalisé d'un seul tenant avec le ou les pistons (33 ; 33a ; 33b ; 33c) ou avec le ou les éléments de butée (45, 46 ; 45b, 46b ; 45c, 46c),
h. le ou les éléments de tampon de butée (55 ; 55a ;
55b ; 55c) étant réalisés en matière plastique.

2. Amortisseur selon la revendication 1, **caractérisé en ce que** le ou les tampons de butée (54 ; 54a ; 54b ; 54c) présentent au moins un évidement de tampon de butée (56 ; 56b ; 56c), celui-ci étant délimité partiellement par le ou les éléments de tampon de butée (55 ; 55a ; 55b ; 55c) et étant réalisé de manière que le ou les éléments de tampon de butée (55 ; 55a ; 55b ; 55c) sont déformables dans le ou les évidements de tampon de butée (56 ; 56b ; 56c).

3. Amortisseur selon la revendication 1 à 2, **caractérisé en ce que** le ou les éléments de tampon de butée (55 ; 55a ; 55b ; 55c) sont réalisés en forme d'arc.

4. Amortisseur selon la revendication 3, **caractérisé en ce que** deux éléments de tampon de butée (55 ; 55b ; 55c) dirigés l'un vers l'autre et effilés sont prévus pour réaliser le ou les tampons de butée (54 ; 54b ; 54c).

5. Amortisseur selon la revendication 3, **caractérisé en ce que** un élément de tampon de butée (55a) continu et aminci en son milieu est prévu pour réaliser le ou les tampons de butée (54a).

6. Amortisseur selon l'une des revendications 2 à 5, **caractérisé en ce qu'**au moins une limite de tampon de butée (58 ; 58b ; 58c) est disposée dans le ou les évidements de tampon de butée (56 ; 56b ; 56c) pour limiter la déformation de l'élément, ou des éléments de tampon de butée (55 ; 55a ; 55b ; 55c).

7. Amortisseur selon la revendication 6, **caractérisé en ce que** la ou les limites de tampon de butée (58 ; 58b ; 58c) sont réalisées d'un seul tenant avec le ou les éléments de tampon de butée (55 ; 55a ; 55b ; 55c).
